# EUROPEAN PATENT SPECIFICATION

(11) **EP 3 091 170 B1**
(45) Date of publication and mention of the grant of the patent: **10.10.2018**
(21) Application number: 16168138.2
(22) Date of filing: 03.05.2016
(51) Int. Cl.: E06B 9/24, E06B 9/68, H02J 7/35

(54) **METHOD OF OPERATING A DRIVE APPARATUS IN A WINDOW SCREENING KIT, DRIVE APPARATUS AND WINDOW SCREENING KIT**
VERFAHREN ZUM BETRIEB EINER ANTRIEBSVORRICHTUNG IN EINEM FENSTERABSCHIRMUNGSKIT, ANTRIEBSVORRICHTUNG UND FENSTERABSCHIRMUNGSKIT
PROCÉDÉ DE FONCTIONNEMENT D'UN APPAREIL D'ENTRAÎNEMENT DANS UN KIT DE CRIBLAGE DE FENÊTRE, DISPOSITIF D'ENTRAÎNEMENT ET KIT DE CRIBLAGE DE FENÊTRE

(30) Priority: 07.05.2015 DK 201570268
(43) Date of publication of application: 09.11.2016
(73) Proprietor: VKR Holding A/S, 2970 Hørsholm (DK)
(72) Inventor: THOMSEN, Jan, 6950 Ringkøbing (DK)
(74) Representative: Patentgruppen A/S

(56) References cited:
- US-A1- 2009 243 548
- US-A1- 2013 233 496
- US-A1- 2014 145 511

## Description

### Technical field

The present invention relates to a method of operating a drive apparatus in a window screening kit, drive apparatus and window screening kit.

### Background art

Window screening kits with drive apparatuses such as motorized blinds, venetian blinds, awnings or roller shutters and the like for windows are well known in the art.

The drive apparatus may drive a moveable part of the window screening kit between positions e.g. to control the amount of sunlight that enters a room through a window.

The window screening kit with a drive apparatus is often remotely controlled in situations of less accessible window locations or plurality of windows in a room with the window screening kits being controlled as a group.

Powering for the drive apparatus may be provided from connection to an electrical grid or from electrical batteries in the window screening kit e.g. with recharging possibilities from solar cells mounted on the surface of the window screening kit.

A window screening kit using electrical batteries as a power source has the advantages of an easier installation and less demanding safety requirements with no external electrical connections. However, the less accessible location and the number of the window screening kits demand a high durability of the batteries to avoid a frequent and costly change of the batteries.

Batteries are negatively affected by poor work conditions such as high temperature of a window with glass through which light and especially sun light enters.

US patent no. 7,089,991 discloses drive means for a window screening device where the temperature in a battery power supply is reduced via a mechanical heat-conducting connection in the encapsulating part of the battery power supply.

US 2014/0145511 A1 discloses a method of controlling the charging of batteries by a solar cell.

It is thus an object of the invention to provide an improved method of operating a drive apparatus in relation to conditions of a battery storage in a drive apparatus of a window screening kit.

### Brief description of the invention

The present invention relates to a method of operating a drive apparatus in a window screening kit such as a blind, venetian blind, awning or roller shutter for a window, said method comprising the steps of:
powering an electrical motor in said drive apparatus from a power supply unit for driving a moveable part of the window screening kit between positions wherein said power supply unit includes a battery storage for energy storing and powering said electrical motor, at least one solar power cell for powering said electrical motor and/or said battery storage and a regulator unit,
detecting state of charge (SOC) such as voltage values of said battery storage and detecting a temperature values in or at said battery storage with at least voltage and temperature detectors,
comparing said detected SOC and temperature values in said regulator unit with predefined threshold values of SOC and temperature for said battery storage, and regulating powering of said battery storage with said regulator unit in response to the comparison of detected values.

Hereby is obtained an improved method of operating a drive apparatus in relation to the voltage and temperature conditions of the battery storage in a drive apparatus of a window screening kit.

The knowledge of detected voltage and temperature values for the battery storage especially allows adaption of the method to operation with a specific battery type e.g. in relation to battery life and charge level of the battery storage.

In a preferred aspect of the invention, voltage of said solar power cell is detected and compared with a predefined threshold value for solar power cell voltage. Hereby it is ensured that the solar power cell voltage has a level suitable for use in the drive apparatus.

In a preferred aspect of the invention, said electrical motor, solar power cell and/or battery storage are disconnected from the drive apparatus if detected voltage or temperature values are above or below threshold values in the comparison. Hereby is ensured that the different means in the drive apparatus are not damaged by the voltage or temperature conditions.

In a preferred aspect of the invention, said solar power cell is connected or remain connected to said electrical motor if said battery storage is disconnected from said drive apparatus.

In preferred aspects of the invention, one of said detectors detects an open-circuit voltage and/or a load voltage for said battery storage. Hereby are achieved precise battery voltage values in a simple manner by detecting the voltage over load resistor in an on-off and/or constant time period.

In a preferred aspect of the invention, powering of said battery storage is regulated by said predefined threshold values in areas of charging, no charging and restricted charging, respectively, defined by a minimum and/or maximum set or sets of lower and/or upper voltage and temperature threshold values. Hereby is ensured that charging of the battery storage is performed when the voltage and temperature conditions define a safe area of charging (area for said battery storage of charging) and not performed in a defined area(s) wherein charging of the battery storage is not safe or advisable or reduces the battery operating life.

In a preferred aspect of the invention, the area of charging is defined by approx. 0 to 80% of nominal battery storage voltage and approx. below +50°C as temperature in or at the battery storage, the restricted charging area is defined by approx. 0 to 80% of nominal battery storage voltage and approx. +50°C to +65°C as temperature in or at the battery storage and the no charging area is defined by approx. 80 to 100% of nominal battery storage voltage and/or above approx. +65°C as temperature in or at the battery storage. Hereby are achieved advantageous ranges for operating a drive apparatus in a window screening kit wherein battery life of some battery types is significantly reduced if the battery storage is close to or already fully charged and/or the temperature in or at the battery storage is too high.

The possibility of charging the battery storage in a restricted charging area is especially advantageous as it provides an intermediate area for charging the battery storage when necessary to maintain battery power and without damaging the battery storage significantly. The area also provides the possibility of not charging the battery storage when it is not necessary i.e. the possibility of maintaining battery power and battery life at the same time.

In another preferred aspect of the invention, the area of charging is defined by approx. 0 to 75% of nominal battery storage voltage and approx. below +50°C as temperature in or at the battery storage, the restricted charging area is defined by approx. 0 to 75% of nominal battery storage voltage and approx. +50°C to +70°C as temperature in or at the battery storage and/or approx. 75 to 95% of nominal battery storage voltage and approx. below +70°C as temperature in or at the battery storage and the no charging area is defined by approx. 95 to 100% of nominal battery storage voltage and/or above approx. +70°C as temperature in or at the battery storage. Hereby are achieved other advantageous ranges for operating a drive apparatus in a window screening kit.

In a preferred aspect of the invention, said moveable part of the kit is moved to a storage position such as a fully retracted position when said battery storage is in a not normal operation. Hereby is ensured that the window screening kit is moved to a pre-defined position if the drive apparatus and battery storage is in a no drive situation.

In a further preferred aspect of the invention, powering of said electrical motor is provided by one or more super capacitors as supplementary energy storage to said battery storage in a not normal operation. Hereby is ensured that the drive apparatus always has the necessary power to drive the moveable part of the window screening kit to a pre-defined position such as a fully retracted position allowing sunlight to enter and cast light on a room.

In a preferred aspect of the invention, the position of the moveable part of the kit is controlled by automatic algorithms and/or sensors such as solar light sensors. Hereby is an advantageous aspect of the invention achieved by the sensors assisting in providing better battery storage conditions.

In a preferred aspect of the invention, powering is provided by a lithium (Li) based battery or battery pack as said battery storage. Hereby is ensured that the operational time of a window screening kit is extended as a lithium (Li) based batteries have a high specific energy per unit mass and provides a lightweight drive apparatus e.g. when build into a moveable part of the window screening kit as a battery storage.

The invention also relates to a drive apparatus for a window screening kit such as a blind, venetian blind, awning or roller shutter for a window, said apparatus comprising:
at least one electrical motor for driving a moveable part of the window screening kit between positions,
a power supply unit including,
   a battery storage for energy storing and powering said electrical motor,
   at least one solar power cell for powering said electrical motor and/or said battery storage, and
   a regulator unit for regulating the powering within said drive apparatus,
voltage and temperature detectors for detecting state of charge (SOC) values such as voltage of said battery storage and for detecting a temperature values in or at said battery storage,
wherein said regulator unit regulates powering of said battery storage in response to comparison of said detected SOC and temperature values with predefined threshold values of SOC and temperature for said battery storage.

Hereby is an advantageous drive apparatus according to the invention achieved.

In preferred aspects of the invention, said regulator unit is a shunt regulator or a DC-DC converter which are suitable for different types of solar power cells. DC-DC converters are especially adaptable to cost efficient solar power cells of a manufacturing quality with a high difference in voltage output.

In a preferred aspect of the invention, said battery storage is a lithium (Li) based battery or battery pack such as a lithium ion (Li-ion) battery or a battery variant hereof e.g. Li polymer, Li sulfur, Li titanate, LiFePO₄ and thin film Li. Li-ion batteries have a high specific energy per unit mass ensuring a lightweight drive apparatus e.g. when build into a moveable part of the window screening kit as the battery storage. However, Li-ion batteries also require specific voltage and temperature conditions to ensure a correct battery charging by the solar power cells. Wrong charging conditions may reduce life or cause permanent damage to the Li-ion batteries and require cost and time consuming battery replacement in window screening kits.

In a preferred aspect of the invention, said battery storage is located in said moveable part of the window screening kit e.g. inside a transversal profile / bottom rail / bottom bar of the kit which may be arranged to run along guide means extending at the longitudinal ends of said transversal profile and together with said electrical motor. The location of the battery storage in the moveable part of the window screening kit ensures a compact drive apparatus and especially a lightweight solution with the use of battery types having a high specific energy density.

In a preferred aspect of the invention, said battery storage is located in or at stationary parts of the window screening kit such as a head rail / top box. The location of the battery storage in or at stationary parts of the window screening kit ensures a simpler drive apparatus and especially the possibility of providing less demanding temperature conditions.

In a preferred aspect of the invention, said battery storage is located inside a tubular motor unit in order to provide a particularly compact, small diameter and lightweight solution for the drive apparatus.

Further, the invention relates to a window screening kit comprising at least one drive apparatus according to any of claims 13 to 23. Hereby is achieved an advantageous solution for a window screening kit.

### Figures

Aspects of the present disclosure will be described in the following with reference to the figures in which:
- Fig. 1: illustrates a window with a window screening kit comprising a drive apparatus according to the invention,
- Fig. 2: illustrates a basic flow chart of a method for operating a drive apparatus in a window screening kit according to the invention,
- Fig. 3: illustrates a further flow chart of a method for operating a drive apparatus in a window screening kit according to the invention,
- Fig. 4: illustrates a first area diagram of a method for operating a drive apparatus in a window screening kit according to the invention,
- Fig. 5: illustrates a second area diagram of a method for operating a drive apparatus in a window screening kit according to the invention, and
- Fig. 6: illustrates an embodiment of a window screening kit comprising a drive apparatus according to the invention.

### Detailed description of the invention

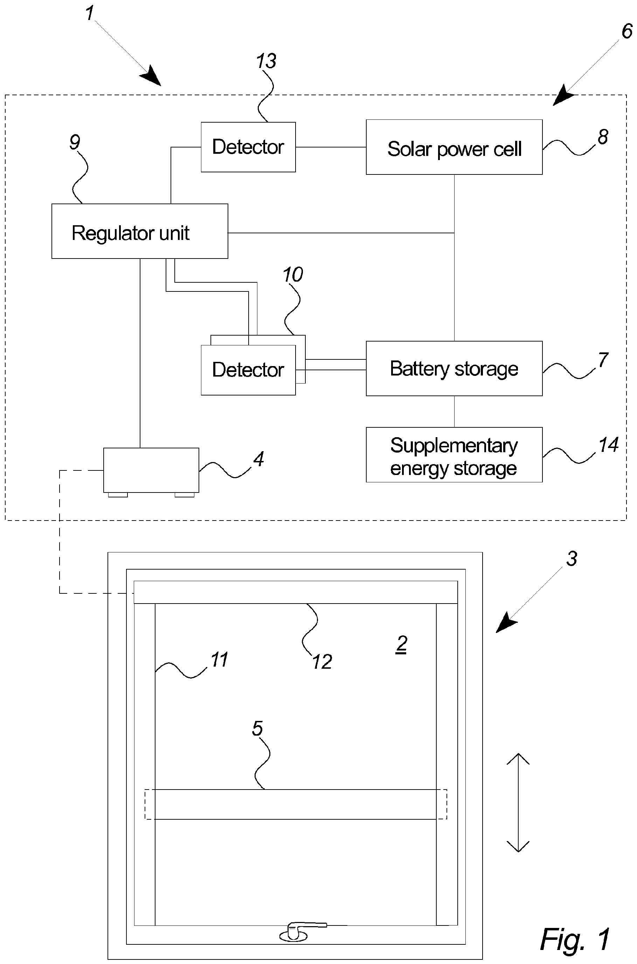

Figure 1 illustrates a window 3 with a window screening kit 2 comprising a drive apparatus 1 according to the invention.

The window screening kit 2 comprises a top box or rail 12 and two guide means 11 mounted on and extending along the corresponding window sash or sections. The kit also comprises a moveable part 5 as a bottom bar or rail for a blind.

The guide means 11 have been designed in such a manner that they serve as guides for a moveable part 5 which may be moved up and down as illustrated by the arrow between the lower edge of the window and the top box 12 and to any given position in between these limits. The moveable part 5 is connected to a screening material, which extends between the moveable part 5 and the top box 12.

The two guide means 11 are designed in such a manner that they may guide the moveable part 5 during movement and for this purpose, the moveable part 5 has been provided with means at both ends for cooperation with two guide means 11.

The window screening kit 2 may for example be a blind, venetian blind, awning or roller shutter for the window 3.

The drive apparatus 1 for a window screening kit 2 comprises an electrical motor 4 for driving the moveable part 5 in the movement between positions and a power supply unit 6 for powering the electrical motor 4 such as a DC brushless motor.

The power supply unit 6 at least includes a battery storage 7, a solar power cell 8 and a regulator unit 9. The solar power cell 8 converts sunlight to electrical energy which is transferred and stored in the battery storage 7 for subsequent powering of the electrical motor 4 via the regulator unit 9.

The regulator unit 9 regulates the powering of the electrical motor 4 and/or battery 7 in the drive apparatus 1 and may for example include a shunt regulator or a DC-DC converter.

A voltage detector 10 detects a voltage of the battery storage 7 in relation to a nominal battery voltage and state of charge (SOC value in %) is established for the battery storage 7. Other parameters such as storage battery temperature, age, impedance etc. may utilized to establish the storage battery 7 level.

A temperature detector 10 also detects the temperature in or at the battery storage 7.

The regulator unit 9 regulates the powering of the drive apparatus 1 in response to - at least - detected voltage and temperature values by the detectors 10 of the battery storage 7.

The regulation of powering the drive apparatus 1 between a normal / not normal operation by the regulator unit 9 may for example include initiating or termination of battery storage charging and connection/disconnection of means in the drive apparatus 1.

A further optional voltage detector 13 detects the voltage of the solar power cell 8 in an embodiment of the invention. The detected solar power cell voltage can for example control when the solar power cell is to be disconnected from the battery storage 7.

The drive apparatus 1 may also include a supplementary energy storage 14 such as one or more super capacitors for supplementary powering of the electrical motor 4.

The window screening kit may also comprise or communicate with one or more standard weather sensors (not illustrated in the figure) such as e.g. solar light sensors, wind speed sensors and rain sensors. The position of the moveable part of the kit may be controlled by the sensors or via automatic algorithms. Such control with more frequent movement is best realized with an optimized storage battery as presented in this disclosure.

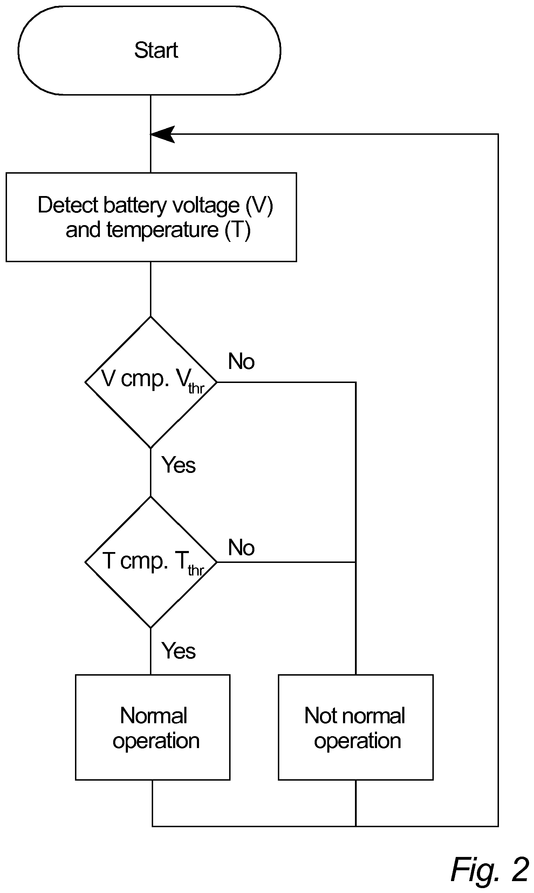

Fig. 2 illustrates a basic flow chart of a method for operating a drive apparatus in a window screening kit according to the invention.

The flow chart includes an initial method step of detecting the SOC value such as voltage (V) and the temperature (T) of a battery storage.

The detected voltage value is compared with a threshold voltage value (Vₜₕᵣ) which result is part in defining a normal or not normal operational situation for the drive apparatus. Temperature in or at the battery storage is compared with a threshold temperature value (Tₜₕᵣ) if the preceding voltage comparison results in YES to normal operation in relation to detected voltage. Normal operation for the drive apparatus is concluded if the temperature comparison also results in a YES.

The normal operation status may for example include the possibility of charging the battery storage from the solar power cell and/or powering the electrical motor from the battery storage.

A NO from the voltage or temperature comparison results in a not normal operation for the drive apparatus and different actions may be performed until the voltage detection results in YES to normal operation. One action may be to inhibit the motor 4 is order to reduce the wear on the storage battery storage 7. One action may be to limit the drain on the storage battery for example by operating the motor slower. One action may be to use power from a supplementary energy storage 14 and/or the solar power cell 8 to reduce the load on the storage battery 7.

A not normal operation status by the detected voltage or temperature values being above or below threshold values in the comparison may for example result in disconnection of the electrical motor, solar power cell and/or battery storage from the drive apparatus as safety measures. In one example a not normal operation is when the detected battery temperature is above a threshold such as for example 90°C and/or when the detected battery level is below a threshold such as for example 10%. The SOC threshold Vₜₕᵣ may be indicative for when the storage battery is low. So when the comparison results in a No the storage battery is near empty and a not normal operation is employed. The temperature threshold Tₜₕᵣ may be indicative for when the battery is over heated. So when the comparison results in a No the storage battery is hotter than rated operating temperature and a not normal operation is employed.

In one further aspect the not normal operation is also employed below a certain temperature. The temperature threshold Tₜₕᵣ may be indicative for when the battery is to cold. So when the comparison results in a No the storage battery is colder than rated operating temperature and a not normal operation is employed.

However, the solar power cell may in an embodiment be connected or remain connected directly to the electrical motor in a situation of not normal operation as a further safety measure even if the battery storage is disconnected from the drive apparatus. The solar power may for example allow the window screening kit to move into a predefined position in a not normal operation situation for the drive apparatus.

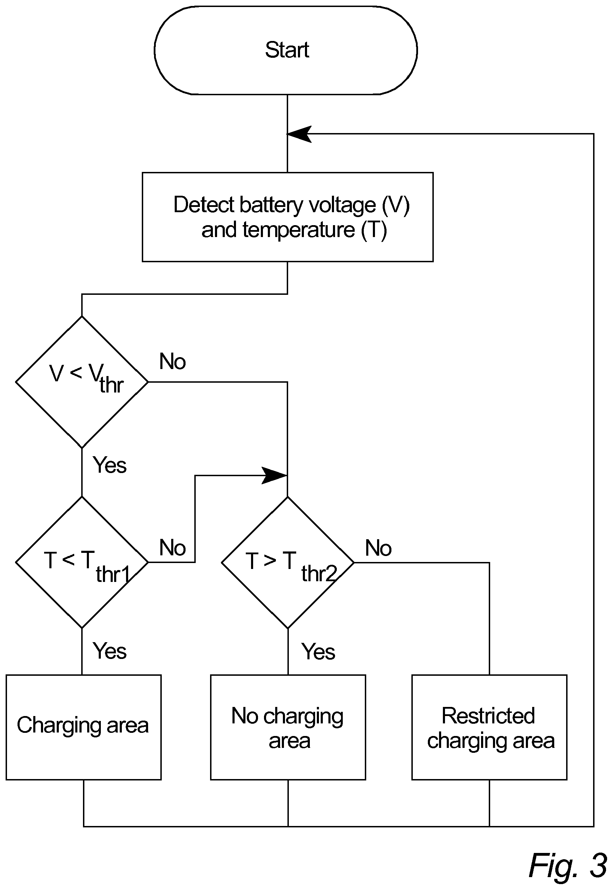

Fig. 3 illustrates a further flow chart of a method for operating a drive apparatus in a window screening kit according to the invention.

The flow chart also includes an initial method step of detecting the voltage (V) and temperature (T) of a battery storage.

The detected voltage and temperature values are compared with a threshold voltage value and two sets of temperature values in defining the charging possibilities for a battery storage in the drive apparatus.

The regulating the powering of the drive apparatus 1 may in an embodiment of the invention comprise the three possibilities of charging, restricted charging or no charging of the battery storage.

Temperature in or at the battery storage is compared with a first threshold temperature value (Tₜₕᵣ₁) if the voltage comparison results in YES to normal operation. Normal operation for the drive apparatus and possibility of charging the battery storage is concluded if the first temperature comparison also results in a YES.

A NO in the first temperature comparison will trigger a further temperature comparison with a second threshold temperature value (Tₜₕᵣ₂). The result of the second temperature comparison will define whether there should be no charging or a restricted charging of the battery storage is a possibility.

Embodiments with comparisons involving two sets of threshold voltage values together with one or two sets of threshold temperature values are also possible. Even more sets of threshold voltage and/or temperature values e.g. in connection with further charging possibilities are possible.

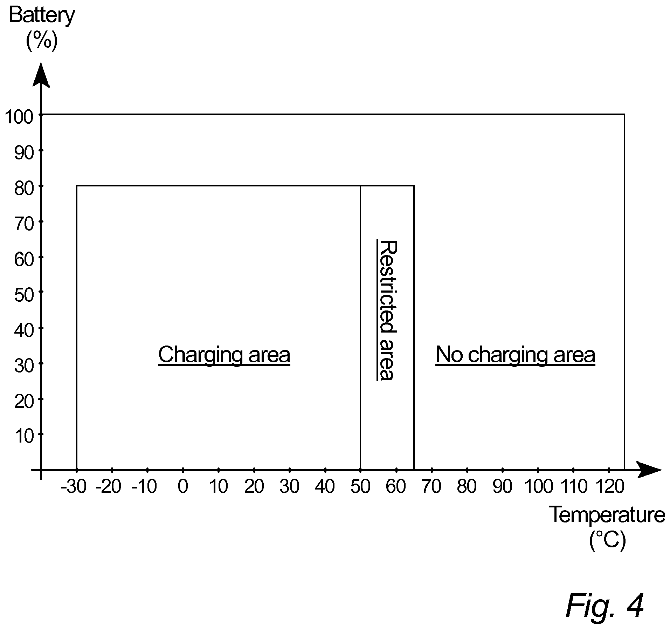

Fig. 4 illustrates a first area diagram of a method for operating a drive apparatus in a window screening kit according to the invention.

The regulator unit and the predefined threshold values create areas in an area diagram for the battery storage of:
- charging,
- no charging, and
- restricted charging,
respectively, defined by a minimum and/or maximum set or sets of lower and/or upper voltage and temperature threshold values.

In one example the charging, restricted charging and no charging state respectively is a function of measured SOC value such as voltage and the measured temperature.

Restricted charging may be charging with a reduced voltage. Restricted charging may be charging with a lower voltage than regular charging. In one example restricted charging is regulated to 4V while charging is regulated to about 4,2V.

The battery storage preferably comprises Li-ion batteries in a preferred embodiment of the invention. Li has advantages such as low weight, small size and high power density. Long term use in rough climate applications requires precautions.

Detected battery voltage and nominal voltage values may be used in establishing a state of charge value (SOC values in %) for the given type of battery such as the mentioned Li-ion batteries. In one example the SOC values are compared with SOC thresholds such as voltage and temperature values of a first area diagram.

The first area diagram defines:
- an area of charging by a SOC value of approx. 0 to 80% and approx. below +50°C as temperature in or at the battery storage,
- a restricted charging area by a SOC value of approx. 0 to 80% and approx. +50°C to +65°C as temperature in or at the battery storage, and
- a no charging area by a SOC value of approx. 80 to 100% and/or above approx. +65°C as temperature in or at the battery storage.

It is noted, that one threshold or interval in the diagram may be used for charging, restricted charging or no charging without the need to use the other thresholds or interval values indicated.

The diagram shows that the storage battery 7 is not charged to its maximum SOC value. The charging may switch to no charging before the maximum SOC value is reached.

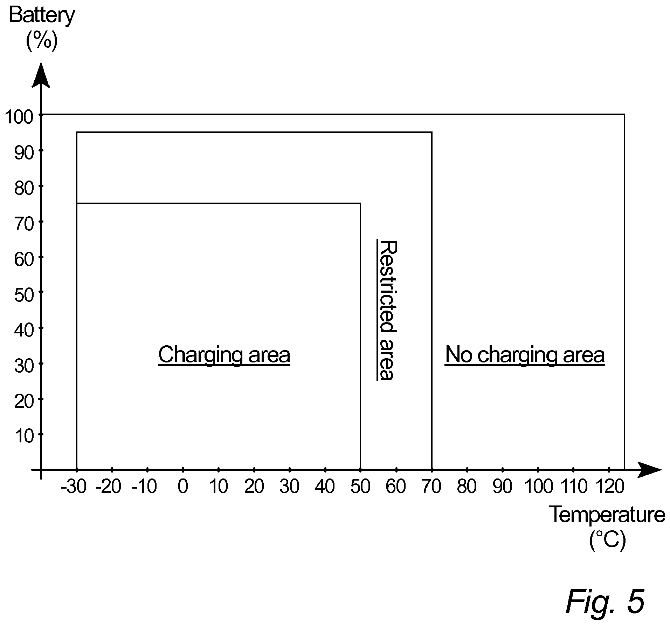

Fig. 5 illustrates a second area diagram of a method for operating a drive apparatus in a window screening kit according to the invention.

The battery storage in the drive apparatus preferably comprises Li-ion batteries.

The second area diagram defines:
- an area of charging by a SOC value of approx. 0 to 75% and approx. below +50°C as temperature in or at the battery storage,
- a restricted charging area by a SOC value of approx. 0 to 75% and approx. +50°C to +70°C as temperature in or at the battery storage and/or approx. 75 to 95% and approx. below +70°C as temperature in or at the battery storage, and
- a no charging area is defined by a SOC value of approx. 95 to 100% of and/or above approx. +70°C as temperature in or at the battery storage.

It is noted, that one threshold or interval in the diagram may be used for charging, restricted charging or no charging without the need to use the other thresholds or interval values indicated.

The diagram shows that the storage battery 7 is not charged to its maximum SOC. The restricted charging may switch to no charging before the maximum SOC is reached.

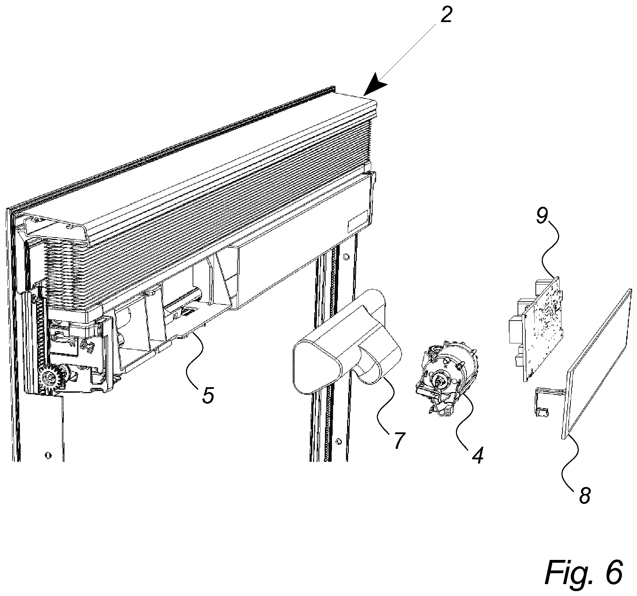

Fig. 6 illustrates an upper part of a window screening kit 2 comprising a moveable part 5 with a drive apparatus 1 according to an embodiment of the invention.

The moveable part 5 of the window screening kit 2 is illustrated in an exploded view comprising a battery storage 7 as a battery pack and an electrical motor 4 and gear unit together with a regulator unit 9. The battery pack, motor unit and regulator unit are enclosed side by side in the moveable part 5 with a solar power cell 8 defining a flat outer surface for the moveable part 5. The solar power cell 8 faces the glass part of a window (not illustrated in the figure) which the window screening kit 2 is mounted on.

The housing of the moveable part 5 of the window screening kit 2 also comprises the detectors 10, 13 (not illustrated in the figure) in order to detect voltage of the battery storage and the solar power cell as well as the temperature in or at the battery storage i.e. in close proximity of the battery storage within the housing.

The invention may in a preferred embodiment comprises Li-ion batteries in the battery storage 7 with a high specific energy per unit mass such as a specific energy density of more than 100 W·h/kg. and preferably more than 150 W·h/kg.

It is generally understood that the invention is not limited to the above examples but may be combined in a multitude of varieties as specified in the claims. It is possible to combine the examples of controlling charging, restricted charging and no charging (figs. 3, 4, 5) with the control of normal operation and not normal operation (fig. 2).

Generally at least in some instances the storage battery 7 charging or restricted charging may switch to no charging before the maximum SOC is reached. Preferably when the storage battery is little short of having full SOC.

Generally the value for state of charge (SOC) is established based on at least voltage values. Other parameters such as battery age, impedance, open voltage and voltage under load etc. may be employed to get better SOC values.

Additionally, it is understood that different embodiments of the figures and/or the description above may be combined to obtain further embodiments not directly described in the above description.

### List

- 1.: Drive apparatus for a window screening kit
- 2.: Window screening kit such as a blind, venetian blind, awning or roller shutter
- 3.: Window
- 4.: Electrical motor in the drive apparatus for driving a moveable part
- 5.: Moveable part in the window screening kit such as a bottom bar or rail
- 6.: Power supply unit
- 7.: Battery storage
- 8.: Solar power cell
- 9.: Regulator unit
- 10.: Voltage and temperature detectors of the battery storage
- 11.: Guide means as side rails extending at the longitudinal ends of the moveable part
- 12.: Top box or rail of the window screening kit
- 13.: Voltage detector for the solar power cell

- SOC.: State of charge
- Li.: Lithium
- Tₜₕᵣ: Threshold temperature value
- Vₜₕᵣ: Threshold voltage value

## Claims

1. Method of operating a drive apparatus (1) in a window screening kit (2) such as a blind, venetian blind, awning or roller shutter for a window (3), said method comprising the steps of:
powering an electrical motor (4) in said drive apparatus (1) from a power supply unit (6) for driving a moveable part (5) of the window screening kit (2) between positions wherein said power supply unit (6) includes a battery storage (7) for energy storing and powering said electrical motor (4), at least one solar power cell (8) for powering said electrical motor (4) and/or said battery storage (7), and a regulator unit (9),
**characterized by**
detecting the state of charge (SOC) such as voltage values of said battery storage (7) and detecting temperature values in or at said battery storage (7) with at least voltage and temperature detectors (10),
comparing said detected state of charge (SOC) and temperature values in said regulator unit (9) with predefined threshold values (Tthr, Vthr) of the state of charge (SOC) and the temperature for said battery storage (7), and
regulating powering of said battery storage (7) with said regulator unit (9) in response to the comparison of detected values.

2. Method according to claim 1 where voltage of said solar power cell (8) is detected and compared with a predefined threshold value for the solar power cell voltage.

3. Method according to claim 1 or 2 where said electrical motor (4), solar power cell (8) and/or battery storage (7) are disconnected from the drive apparatus (1) if detected voltage or temperature values are above or below threshold values (Tthr, Vthr) in the comparison.

4. Method according to any of the preceding claim where said solar power cell (8) is connected or remain connected to said electrical motor (4) if said battery storage (7) is disconnected from said drive apparatus (1).

5. Method according to any of the preceding claim where one of said detectors (10) detects an open-circuit voltage and/or a load voltage for said battery storage (7).

6. Method according to any of the preceding claims where powering of said battery storage (7) is regulated by said predefined threshold values (Tthr, Vthr) in areas of charging, no charging and restricted charging, respectively, defined by a minimum and/or maximum set or sets of lower and/or upper voltage and temperature threshold values (Tthr, Vthr).

7. Method according to claim 6 where the area of charging is defined by approx. 0 to 80% of nominal battery storage (7) voltage and approx. below +50°C as temperature in or at the battery storage (7), the restricted charging area is defined by approx. 0 to 80% of nominal battery storage (7) voltage and approx. +50°C to +65°C as temperature in or at the battery storage (7) and the no charging area is defined by approx. 80 to 100% of nominal battery storage (7) voltage and/or above approx. +65°C as temperature in or at the battery storage (7) or where the area of charging is defined by approx. 0 to 75% of nominal battery storage (7) voltage and approx. below +50°C as temperature in or at the battery storage (7), the restricted charging area is defined by approx. 0 to 75% of nominal battery storage (7) voltage and approx. +50°C to +70°C as temperature in or at the battery storage (7) and/or approx. 75 to 95% of nominal battery storage (7) voltage and approx. below +70°C as temperature in or at the battery storage (7) and the no charging area is defined by approx. 95 to 100% of nominal battery storage (7) voltage and/or above approx. +70°C as temperature in or at the battery storage (7).

8. Method according to any of the preceding claims where the position of the moveable part (5) of the kit (2) is controlled by automatic algorithms and/or sensors such as solar light sensors.

9. Drive apparatus (1) for a window screening kit (2) such as a blind, venetian blind, awning or roller shutter for a window (3), said apparatus comprising:
at least one electrical motor (4) for driving a moveable part (5) of the window screening kit (2) between positions,
a power supply unit (6) including,
a battery storage (7) for energy storing and powering said electrical motor (4),
at least one solar power cell (8) for powering said electrical motor (4) and/or said battery storage (7), and
a regulator unit (9) for regulating the powering within said drive apparatus (1),
**characterized in that** said drive apparatus (1) further comprises
voltage and temperature detectors (10) for detecting state of charge (SOC) values such as voltage of said battery storage (7) and for detecting temperature values in or at said battery storage (7),
wherein said regulator unit (9) regulates powering of said battery storage (7) in response to comparison of said detected state of charge (SOC) and temperature values with predefined threshold values (Tthr, Vthr) of the state of charge (SOC) and temperature for said battery storage (7).

10. Drive apparatus (1) according to claim 9 wherein said regulator unit (9) is a shunt regulator or a DC-DC converter.

11. Drive apparatus (1) according to claim 9 or 10 wherein said battery storage (7) is a lithium (Li) based battery or battery pack such as a lithium ion (Li-ion) battery or a battery variant hereof e.g. Li polymer, Li sulfur, Li titanate, LiFePO₄ and thin film Li.

12. Drive apparatus (1) according to any of claims 9 to 11 wherein said regulator unit (9) and said predefined threshold values (Tthr, Vthr) create areas for said battery storage (7) of charging, no charging and restricted charging, respectively, defined by a minimum and/or maximum set or sets of lower and/or upper voltage and temperature threshold values (Tthr, Vthr).

13. Drive apparatus (1) according to claim 12 wherein the area of charging is defined by approx. 0 to 80% of nominal battery storage (7) voltage and approx. below +50°C as temperature in or at the battery storage (7), the restricted charging area is defined by approx. 0 to 80% of nominal battery storage (7) voltage and approx. +50°C to +65°C as temperature in or at the battery storage (7) and the no charging area is defined by approx. 80 to 100% of nominal battery storage (7) voltage and/or above approx. +65°C as temperature in or at the battery storage (7) or wherein the area of charging is defined by approx. 0 to 75% of nominal battery storage (7) voltage and approx. below +50°C as temperature in or at the battery storage (7), the restricted charging area is defined by approx. 0 to 75% of nominal battery storage (7) voltage and approx. +50°C to +70°C as temperature in or at the battery storage (7) and/or approx. 75 to 95% of nominal battery storage (7) voltage and approx. below +70°C as temperature in or at the battery storage (7) and the no charging area is defined by approx. 95 to 100% of nominal battery storage (7) voltage and/or above approx. +70°C as temperature in or at the battery storage (7).

14. Drive apparatus (1) according to any of claims 9 to 13 wherein said battery storage (7) is located in said moveable part (5) of the window screening kit (2) e.g. inside a transversal profile / bottom rail / bottom bar of the kit which may be arranged to run along guide means (11) extending at the longitudinal ends of said transversal profile and together with said electrical motor (4).

15. Window screening kit (2) comprising at least one drive apparatus (1) according to any of claims 9 to 14.

## Patentansprüche

1. Verfahren zum Betreiben einer Antriebsvorrichtung (1) in einer Fenster-Abschirmeinrichtung (2), wie etwa einem Rollo, einer Jalousie, einer Markise oder einem Rollladen für ein Fenster (3), wobei das Verfahren die folgenden Schritte umfasst:
Versorgen eines Elektromotors (4) in der Antriebsvorrichtung (1) durch eine Stromversorgungseinheit (6), um einen beweglichen Teil (5) der Fenster-Abschirmeinrichtung (2) zwischen Positionen anzutreiben, wobei die Stromversorgungseinheit (6) einen Batteriespeicher (7) zur Energiespeicherung und zum Versorgen des Elektromotors (4), wenigstens eine Solarstromzelle (8) zum Versorgen des Elektromotors (4) und/oder des Batteriespeichers (7) und eine Reglereinheit (9) umfasst,
und durch Folgendes gekennzeichnet ist:
Detektieren des Ladezustands (SOC), wie etwa Spannungswerte, des Batteriespeichers (7) und Detektieren von Temperaturwerten in oder am Batteriespeicher (7) mit wenigstens einem Spannungs- und Temperaturdetektor (10),
Vergleichen der Werte für den Ladezustand (SOC) und die Temperatur in der Reglereinheit (9) mit vorgegebenen Schwellwerten (Tthr, Vthr) für den Ladezustand (SOC) und die Temperatur für den Batteriespeicher (7), und
Regeln der Versorgung des Batteriespeichers (7) mit der Reglereinheit (9) in Reaktion auf den Vergleich der detektierten Werte.

2. Verfahren nach Anspruch 1, wobei die Spannung der Solarstromzelle (8) detektiert und mit einem vorgegebenen Schwellwert für die Solarstromzellenspannung verglichen wird.

3. Verfahren nach Anspruch 1 oder 2, wobei der Elektromotor (4), die Solarstromzelle (8) und/oder der Batteriespeicher (7) von der Antriebsvorrichtung (1) getrennt werden, falls detektierte Spannungs- oder Temperaturwerte im Vergleich über oder unter Schwellwerten (Tthr, Vthr) liegen.

4. Verfahren nach einem der vorhergehenden Ansprüche, wobei die Solarstromzelle (8) mit dem Elektromotor (4) verbunden wird oder bleibt, wenn der Batteriespeicher (7) von der Antriebsvorrichtung (1) getrennt wird.

5. Verfahren nach einem der vorhergehenden Ansprüche, wobei einer der Detektoren (10) für den Batteriespeicher (7) eine Leerlaufspannung und/oder eine Ladespannung detektiert.

6. Verfahren nach einem der vorhergehenden Ansprüche, wobei die Versorgung des Batteriespeichers (7) durch die vorgegebenen Schwellwerte (Tthr, Vthr) in Bereiche für das Laden, Nicht-Laden bzw. eingeschränktes Laden geregelt wird, die durch einen Minimum- und/oder Maximum-Satz oder Sätze von unteren und/oder oberen Spannungs- und Temperaturschwellwerten (Tthr, Vthr) definiert sind.

7. Verfahren nach Anspruch 6, wobei der Bereich für das Laden durch ungefähr 0 bis 80% der Nennspannung des Batteriespeichers (7) und ungefähr unter +50°C als Temperatur in oder am Batteriespeicher (7) definiert ist, der Bereich für das eingeschränkte Laden durch ungefähr 0 bis 80% der Nennspannung des Batteriespeichers (7) und ungefähr +50°C bis +65°C als Temperatur in oder am Batteriespeicher (7) definiert ist und der Bereich für das Nicht-Laden durch ungefähr 80 bis 100% der Nennspannung des Batteriespeichers (7) und/oder ungefähr über +65°C als Temperatur in oder am Batteriespeicher (7) definiert ist, oder wobei der Bereich für das Laden durch ungefähr 0 bis 75% der Nennspannung des Batteriespeichers (7) und ungefähr unter +50°C als Temperatur in oder am Batteriespeicher (7) definiert ist, der Bereich für das eingeschränkte Laden durch ungefähr 0 bis 75% der Nennspannung des Batteriespeichers (7) und ungefähr +50°C bis +70°C als Temperatur in oder am Batteriespeicher (7) und/oder ungefähr 75 bis 95% der Nennspannung des Batteriespeichers (7) und ungefähr unter +70°C als Temperatur in oder am Batteriespeicher (7) definiert ist, und der Bereich für das Nicht-Laden durch ungefähr 95 bis 100% der Nennspannung des Batteriespeichers (7) und/oder ungefähr über +70°C als Temperatur in oder am Batteriespeicher (7) definiert ist.

8. Verfahren nach einem der vorhergehenden Ansprüche, wobei die Position des beweglichen Teils (5) der Einrichtung (2) durch automatische Algorithmen und/oder Sensoren, wie etwa Sonnenlichtsensoren, gesteuert wird.

9. Antriebsvorrichtung (1) für eine Fenster-Abschirmeinrichtung (2), wie etwa einem Rollo, einer Jalousie, einer Markise oder einem Rollladen für ein Fenster (3), wobei die Vorrichtung Folgendes umfasst:
wenigstens einen Elektromotor (4), um einen beweglichen Teil (5) der Fenster-Abschirmeinrichtung (2) zwischen Positionen anzutreiben,
eine Stromversorgungseinheit (6), Folgendes umfassend:
einen Batteriespeicher (7) zur Energiespeicherung und zum Versorgen des Elektromotors (4),
wenigstens eine Solarstromzelle (8) zum Versorgen des Elektromotors (4) und/oder des Batteriespeichers (7), und
eine Reglereinheit (9) zur Regelung der Versorgung innerhalb der Antriebsvorrichtung (1),
**dadurch gekennzeichnet, dass** die Antriebsvorrichtung (1) außerdem Folgendes umfasst:
Detektoren (10) für Spannung und Temperatur zum Detektieren von Werten für den Ladezustand (SOC), wie etwa der Spannung, des Batteriespeichers (7), und zum Detektieren von Temperaturwerten in oder am Batteriespeicher (7),
wobei die Reglereinheit (9) die Versorgung des Batteriespeichers (7) in Reaktion auf einen Vergleich der Werte für den Ladezustand (SOC) und der Temperatur mit vorgegebenen Schwellwerten (Tthr, Vthr) für den Ladezustand (SOC) und die Temperatur für den Batteriespeicher (7) regelt.

10. Antriebsvorrichtung (1) nach Anspruch 9, wobei die Reglereinheit (9) ein Nebenschlussregler oder ein DC-DC-Wandler ist.

11. Antriebsvorrichtung (1) nach Anspruch 9 oder 10, wobei der Batteriespeicher (7) eine auf Lithium (Li) basierende Batterie oder ein Batteriepack ist, wie etwa eine Lithium-Ionen (Li-ion) Batterie, oder eine Batterievariante davon, beispielsweise Li-Polymer, Li-Schwefel, Li-Titanat, LiFePO₄ und Dünnfilm-Li.

12. Antriebsvorrichtung (1) nach einem der Ansprüche 9 bis 11, wobei die Reglereinheit (9) und die vorgegebenen Schwellwerte (Tthr, Vthr) Bereiche für den Batteriespeicher (7) für das Laden, Nicht-Laden bzw. eingeschränktes Laden erzeugen, die durch einen Minimum- und/oder Maximum-Satz oder Sätze von unteren und/oder oberen Spannungs- und Temperaturschwellwerten (Tthr, Vthr) definiert sind.

13. Antriebsvorrichtung (1) nach Anspruch 12, wobei der Bereich für das Laden durch ungefähr 0 bis 80% der Nennspannung des Batteriespeichers (7) und ungefähr unter +50°C als Temperatur in oder am Batteriespeicher (7) definiert ist, der Bereich für das eingeschränkte Laden durch ungefähr 0 bis 80% der Nennspannung des Batteriespeichers (7) und ungefähr +50°C bis +65°C als Temperatur in oder am Batteriespeicher (7) definiert ist und der Bereich für das Nicht-Laden durch ungefähr 80 bis 100% der Nennspannung des Batteriespeichers (7) und/oder ungefähr über +65°C als Temperatur in oder am Batteriespeicher (7) definiert ist, oder wobei der Bereich für das Laden durch ungefähr 0 bis 75% der Nennspannung des Batteriespeichers (7) und ungefähr unter +50°C als Temperatur in oder am Batteriespeicher (7) definiert ist, der Bereich für das eingeschränkte Laden durch ungefähr 0 bis 75% der Nennspannung des Batteriespeichers (7) und ungefähr +50°C bis +70°C als Temperatur in oder am Batteriespeicher (7) und/oder ungefähr 75 bis 95% der Nennspannung des Batteriespeichers (7) und ungefähr unter +70°C als Temperatur in oder am Batteriespeicher (7) definiert ist, und der Bereich für das Nicht-Laden durch ungefähr 95 bis 100% der Nennspannung des Batteriespeichers (7) und/oder ungefähr über +70°C als Temperatur in oder am Batteriespeicher (7) definiert ist.

14. Antriebsvorrichtung (1) nach einem der Ansprüche 9 bis 13, wobei der Batteriespeicher (7) im beweglichen Teil (5) der Fenster-Abschirmeinrichtung (2) angeordnet ist, beispielsweise innerhalb eines querlaufenden Profils / unteren Schiene / unteren Stange der Einrichtung, das oder die dafür eingerichtet sein kann, entlang einem Führungsmittel (11) zu laufen, das sich an den Enden in Längsrichtung des querlaufenden Profils erstreckt, und zusammen mit dem Elektromotor (4).

15. Fenster-Abschirmeinrichtung (2), die wenigstens eine Antriebsvorrichtung (1) nach einem der Ansprüche 9 bis 14 umfasst.

## Revendications

1. Procédé de fonctionnement d'un appareil d'entraînement (1) dans un kit de criblage de fenêtre (2) tel qu'un store, un store vénitien, un auvent ou un volet roulant pour une fenêtre (3), ledit procédé comprenant les étapes de :
alimentation d'un moteur électrique (4) dans ledit appareil d'entraînement (1) à partir d'une unité d'alimentation (6) pour entraîner une partie mobile (5) du kit de criblage de fenêtre (2) entre des positions, dans lequel ladite unité d'alimentation (6) inclut un stockage par batterie (7) pour un stockage de l'énergie et une alimentation dudit moteur électrique (4), au moins une pile d'alimentation solaire (8) pour alimenter ledit moteur électrique (4) et/ou ledit stockage par batterie (7), et une unité de régulation (9),
**caractérisé par**
la détection de l'état de charge (SOC) tel que des valeurs de tension dudit stockage par batterie (7) et la détection de valeurs de température dans ou au niveau dudit stockage par batterie (7) par au moins des détecteurs de tension et de température (10),
la comparaison desdites valeurs détectées d'état de charge (SOC) et de température dans ladite unité de régulation (9) avec des valeurs seuil prédéfinies (Tthr, Vthr) de l'état de charge (SOC) et de la température pour ledit stockage par batterie (7), et
la régulation de l'alimentation dudit stockage par batterie (7) par ladite unité de régulation (9) en réponse à la comparaison des valeurs détectées.

2. Procédé selon la revendication 1 où la tension de ladite pile d'alimentation solaire (8) est détectée et comparée à une valeur seuil prédéfinie pour la tension de la pile d'alimentation solaire.

3. Procédé selon la revendication 1 ou 2 où lesdits moteur électrique (4), pile d'alimentation solaire (8) et/ou stockage par batterie (7) sont déconnectés de l'appareil d'entraînement (1) si les valeurs détectées de tension ou de température sont au-dessus ou en dessous des valeurs seuil (Tthr, Vthr) dans la comparaison.

4. Procédé selon l'une quelconque des revendications précédentes où ladite pile d'alimentation solaire (8) est connectée ou reste connectée audit moteur électrique (4) si ledit stockage par batterie (7) est déconnecté dudit appareil d'entraînement (1).

5. Procédé selon l'une quelconque des revendications précédentes où l'un desdits détecteurs (10) détecte une tension en circuit ouvert et/ou une tension de sortie pour ledit stockage par batterie (7).

6. Procédé selon l'une quelconque des revendications précédentes où l'alimentation dudit stockage par batterie (7) est régulée par lesdites valeurs seuil prédéfinies (Tthr, Vthr) dans des zones de charge, sans charge et de charge restreinte, respectivement, définies par un ensemble ou des ensembles de minimum et/ou de maximum de valeurs seuil de tension et de température inférieure et/ou supérieure (Tthr, Vthr).

7. Procédé selon la revendication 6 où la zone de charge est définie par approx. 0 à 80 % de la tension nominale du stockage par batterie (7) et approx. en dessous de +50 °C en tant que température dans ou au niveau du stockage par batterie (7), la zone de charge restreinte est définie par approx. 0 à 80 % de la tension nominale du stockage par batterie (7) et approx. +50 °C à +65 °C en tant que température dans ou au niveau du stockage par batterie (7) et la zone sans charge est définie par approx. 80 à 100 % de la tension nominale du stockage par batterie (7) et/ou au-dessus d'approx. +65 °C en tant que température dans ou au niveau du stockage par batterie (7) ou où la zone de charge est définie par approx. 0 à 75 % de la tension nominale du stockage par batterie (7) et approx. en dessous de +50 °C en tant que température dans ou au niveau du stockage par batterie (7), la zone de charge restreinte est définie par approx. 0 à 75 % de la tension nominale du stockage par batterie (7) et approx. +50 °C à +70 °C en tant que température dans ou au niveau du stockage par batterie (7) et/ou approx. 75 à 95 % de la tension nominale du stockage par batterie (7) et approx. en dessous de +70 °C en tant que température dans ou au niveau du stockage par batterie (7) et la zone sans charge est définie par approx. 95 à 100 % de la tension nominale du stockage par batterie (7) et/ou au-dessus d'approx. +70 °C en tant que température dans ou au niveau du stockage par batterie (7).

8. Procédé selon l'une quelconque des revendications précédentes où la position de la partie mobile (5) du kit (2) est commandée par des algorithmes automatiques et/ou des capteurs tels que des capteurs de lumière solaire.

9. Appareil d'entraînement (1) pour un kit de criblage de fenêtre (2) tel qu'un store, un store vénitien, un auvent ou un volet roulant pour une fenêtre (3), ledit appareil comprenant :
au moins un moteur électrique (4) pour entraîner une partie mobile (5) du kit de criblage de fenêtre (2) entre des positions,
une unité d'alimentation (6) incluant,
un stockage par batterie (7) pour un stockage de l'énergie et une alimentation dudit moteur électrique (4),
au moins une pile d'alimentation solaire (8) pour alimenter ledit moteur électrique (4) et/ou ledit stockage par batterie (7), et
une unité de régulation (9) pour réguler l'alimentation à l'intérieur dudit appareil d'entraînement (1),
**caractérisé en ce que** ledit appareil d'entraînement (1) comprend en outre des détecteurs de tension et de température (10) pour détecter des valeurs d'état de charge (SOC) telles que la tension dudit stockage par batterie (7) et pour détecter des valeurs de température dans ou au niveau dudit stockage par batterie (7),
dans lequel ladite unité de régulation (9) régule l'alimentation dudit stockage par batterie (7) en réponse à la comparaison desdites valeurs détectées d'état de charge (SOC) et de température avec des valeurs seuil prédéfinies (Tthr, Vthr) de l'état de charge (SOC) et de la température pour ledit stockage par batterie (7).

10. Appareil d'entraînement (1) selon la revendication 9 dans lequel ladite unité de régulation (9) est un régulateur shunt ou un convertisseur CC-CC.

11. Appareil d'entraînement (1) selon la revendication 9 ou 10 dans lequel ledit stockage par batterie (7) est une batterie ou un bloc-batterie à base de lithium (Li) tel qu'une batterie au lithium-ion (Li-ion) ou une variante de batterie de celle-ci, par exemple un polymère de Li, du Li soufre, du titanate de Li, du LiFePO₄ et du Li en film mince.

12. Appareil d'entraînement (1) selon l'une quelconque des revendications 9 à 11 dans lequel ladite unité de régulation (9) et lesdites valeurs seuil prédéfinies (Tthr, Vthr) créent des zones pour ledit stockage par batterie (7) de charge, sans charge et de charge restreinte, respectivement, définies par un ensemble ou des ensembles de minimum et/ou de maximum de valeurs seuil de tension et de température inférieure et/ou supérieure (Tthr, Vthr).

13. Appareil d'entraînement (1) selon la revendication 12 dans lequel la zone de charge est définie par approx. 0 à 80 % de la tension nominale du stockage par batterie (7) et approx. en dessous de +50 °C en tant que température dans ou au niveau du stockage par batterie (7), la zone de charge restreinte est définie par approx. 0 à 80 % de la tension nominale du stockage par batterie (7) et approx. +50 °C à +65 °C en tant que température dans ou au niveau du stockage par batterie (7) et la zone sans charge est définie par approx. 80 à 100 % de la tension nominale du stockage par batterie (7) et/ou au-dessus d'approx. +65 °C en tant que température dans ou au niveau du stockage par batterie (7) ou dans lequel la zone de charge est définie par approx. 0 à 75 % de la tension nominale du stockage par batterie (7) et approx. en dessous de +50 °C en tant que température dans ou au niveau du stockage par batterie (7), la zone de charge restreinte est définie par approx. 0 à 75 % de la tension nominale du stockage par batterie (7) et approx. +50 °C à +70 °C en tant que température dans ou au niveau du stockage par batterie (7) et/ou approx. 75 à 95 % de la tension nominale du stockage par batterie (7) et approx. en dessous de +70 °C en tant que température dans ou au niveau du stockage par batterie (7) et la zone sans charge est définie par approx. 95 à 100 % de la tension nominale du stockage par batterie (7) et/ou au-dessus d'approx. +70 °C en tant que température dans ou au niveau du stockage par batterie (7).

14. Appareil d'entraînement (1) selon l'une quelconque des revendications 9 à 13 dans lequel ledit stockage par batterie (7) est situé dans ladite partie mobile (5) du kit de criblage de fenêtre (2), par exemple à l'intérieur d'un profilé transversal/rail inférieur/barre inférieure du kit qui peut être agencé(e) de façon à longer un moyen de guidage (11) s'étendant au niveau des extrémités longitudinales dudit profilé transversal et conjointement avec ledit moteur électrique (4).

15. Kit de criblage de fenêtre (2) comprenant au moins un appareil d'entraînement (1) selon l'une quelconque des revendications 9 à 14.
